**Europäisches Patentamt**

**European Patent Office**

**Office européen des brevets**

(11) Veröffentlichungsnummer: **0 062 146**
A1

## (12) EUROPÄISCHE PATENTANMELDUNG

(21) Anmeldenummer: **82101052.7**

(22) Anmeldetag: **12.02.82**

(51) Int. Cl.³: **C 03 B 7/10**

(30) Priorität: **02.04.81 DE 3113303**

(43) Veröffentlichungstag der Anmeldung: **13.10.82**
**Patentblatt 82/41**

(84) Benannte Vertragsstaaten: **AT BE CH FR GB IT LI NL SE**

(71) Anmelder: **VEBA-GLAS Aktiengesellschaft, Ruhrglasstrasse 50, D-4300 Essen 12 (DE)**

(72) Erfinder: **Knoth, Werner-Dieter, Byfangerstrasse 175, D-4300 Essen 15 (DE)**

(74) Vertreter: **Spalthoff, Adolf, Dipl.-Ing., Pelmanstrasse 31 P.O. Box 34 02 20, D-4300 Essen 1 (DE)**

(54) **Schneideinrichtung.**

(57) Die Erfindung betrifft eine Schneideinrichtung zum Zerteilen eines flüssigen Glasstranges in einzelne Abschnitte (Tropfen) für die Weiterverarbeitung zu Hohlglasartikeln. Um einen einwandfreien Schneidvorgang zu erreichen sowie eine vergleichsweise geringe Masse der beim Schneiden bewegten Teile, verbunden mit einer Erhöhung der Produktionsgeschwindigkeit, wird erfindungsgemäß vorgeschlagen, daß die Schneideinrichtung ein Gehäuse (2) aufweist, in welchem mehrere, eine Schneideinheit (3) bildende Schneidelemente (4) sich einander teilweise überdeckend und den Glasstrang (5) umgebend angeordnet sind, die an ihren einen Enden drehbar gelagert und mit den Planetenrädern (7) eines Planetengetriebes verbunden sind, dessen äußerer Zahnkranz (8) mit einem Antrieb in Verbindung steht. Die Schneidkanten der Schneidelemente (4) weisen Kurvenform auf.

Die Erfindung betrifft eine Schneideinrichtung zum Zerteilen eines flüssigen Glasstranges in einzelne Abschnitte (Tropfen) für die Weiterverarbeitung zu Hohlglasartikeln.

Die Aufgabe einer solchen Schneideinrichtung besteht darin, den fließenden, also sich bewegenden Glasstrang durch einen mechanischen Schnitt zu zerteilen. Die Problematik liegt darin, daß die Temperatur des flüssigen Glases vergleichsweise hoch ist, so daß der Schnitt schnell erfolgen muß, um eine unzulässige Erwärmung der Schneideinrichtung zu vermeiden. Dies auch deswegen, weil sich anderenfalls der aus der Speisereinrichtung austretende Glasstrang sich stauen würde. Außerdem muß der Schnitt sauber erfolgen, damit keine Glasfäden gezogen werden oder ein Verschmieren des Glases eintritt.

Es ist bekannt, zu diesem Zwecke Schneideinrichtungen in Form von Scheren zu verwenden, deren Schneidelemente sich an Scherenarmen befinden und zur Durchführung des Schnittes eine gegenläufige Bewegung ausführen. Der Antrieb dieser Scherenmesser erfolgt mechanisch über Kurvenscheiben, elektrisch über Exzenter oder auch auf pneumatischem Wege.

Der Nachteil dieser bekannten Scherenausführung besteht darin, daß der Glasstrang gewissermaßen durchgehackt wird, also ein kurzer Schlag von zwei Seiten erfolgt, verbunden mit einer Winkelform der Schneidelemente. so daß der Glasstrang ruckartig abgetrennt wird.

Ist die Glastemperatur und damit die Verformungseigenschaft des Glases über den Querschnitt nicht konstant, so ist der Schneidwiderstand, den die beiden Messer zu überwinden haben, nicht genau gleich. Infolgedessen ändert sich die Eindringgeschwindigkeit des einen Messers gegenüber der des anderen mit der Folge, daß der Glasstrang in die Richtung gedrückt wird, die sich leichter verformen läßt. Ein Wegschleudern des Stranges bzw. der abgetrennten Abschnitte in diese Richtung ist die Folge. Damit wird für die Glasverarbeitungsmaschine, die den abgetrennten Abschnitt erhalten soll, die Verarbeitung erheblich erschwert. Ein anderer Nachteil dieser bekannten Scherenkonstruktion besteht in der vergleichsweise hohen Masse, die bei jedem Schnitt bewegt werden muß. Einer Steigerung der Produktionsgeschwindigkeit sind damit von vornherein Grenzen gesetzt.

Um diese Nachteile zu vermeiden wird erfindungsgemäß eine Schneideinrichtung vorgeschlagen, welche ein Gehäuse od.dgl. aufweist, in welchem mehrere eine Schneideinheit ergebende Schneidelemente sich einander teilweise überdeckend und den Glasstrang umgebend angeordnet sind, die an ihren einen Enden drehbar gelagert und mit einem Planetengetriebe od.dgl.

verbunden sind, dessen äußerer Zahnkranz mit einem Antrieb in Verbindung steht. Die Schneidelemente einer
Schneideinheit führen eine kombinierte Bewegung aus,
und zwar einerseits konzentrisch vom Rand zur Glasstrangmitte hin und andererseits eine ziehende Bewegung analog
der eines Messerschnittes. Die Schnittgeschwindigkeit kann
vergleichsweise hoch erfolgen, da die zu bewegenden Massen niedrig gehalten sind. Der Schnittverlauf wird über
die Zeit gesteuert, nach dem zurückgelegten Weg der Schneidelemente und deren Geschwindigkeit.

Vorteilhaft weisen die Schneidkanten der Schneidelemente
Kurvenform auf, welche konkav oder konvex ausgebildet sein
können.

Die Kurvenform der Schneidelemente ist derart gestaltet und
diese sind so angeordnet, daß der Bewegungsbereich sich von
völliger Freigabe des Glasstranges bis zu dessen Durchtrennung, d.h. bis geringfügig über die Mittenachse des Glasstranges, erstreckt.

Die Schneidelemente bestehen aus scheibenförmigen Ringsegmenten, jedoch ist es auch möglich, diesen eine Ellipsenform
zu geben.

In einem Gehäuse können mehrere Schneideinheiten vorhanden sein, so daß es möglich ist, mehrere Glasstränge parallel zueinander zu schneiden. Die Schneideinheiten einer Schneideinrichtung können einen gemeinsamen Antrieb besitzen, welcher an einer Zahnstange angreift, die mit dem äußeren Zahnkranz des Planetengetriebes in Eingriff steht.

Als Antrieb für mehrere Schneideinheiten dient vorteilhaft eine hydraulische Axial-Kolben-Einheit.

Als Antriebe für mehrere Schneideinheiten können hydraulische Drehkolben dienen.

Die hydraulischen Antriebe sind durch Umschaltventile od.dgl. betätigt, welche von einem Rechner und Prozessor gesteuert sind, denen die spezifischen Daten zur Erreichung eines optimalen Fertigungsablaufes vorgegeben sind.

Die erfindungsgemäße Schneideinrichtung führt eine Bewegung aus, ähnlich wie eine Blende eines optischen Gerätes.

Durch die Verwendung hydraulischer Antriebe ergibt sich eine außerordentlich hohe Präzision im Bewegungsablauf, hohe Beschleunigungen im Anlauf und kurze Bremswege beim Anhalten der bewegten Teile. Eine Dämpfung mit einer Vernichtung von Energie ist nicht mehr erforderlich, woraus sich die Möglichkeit weiterer, auch energiesparender Geschwindigkeitssteigerungen bei den Bewegungsabläufen ergibt. Außerdem ist die Brandgefahr praktisch ausgeschlossen, da keine Preßluft mehr ausströmen kann, die eine lokalbegrenzte Entflammung erst richtig zu einem Brand entfachen kann.

Es ist bekannt, die Schneidelemente der scherenförmig ausgebildeten Schneideinrichtungen mit einem flüssigen Medium, meist Wasser mit Zusätzen, derart zu kühlen und zu schmieren, daß die Flüssigkeit gegen die beiden Scherenmesser von oben oder von unten gespritzt wird. Der wesentliche Nachteile dieser Art von Kühlung besteht darin, daß beim Spritzen von unten her beispielsweise die heißen keramischen Bauteile der darüber befindlichen Speisereinrichtung laufend mit abgeschreckt werden, was eine fortwährende Zerstörung dieser keramischen Teile zur Folge hat. Nachteilig ist bei dieser Art von Schneidelementenkühlung weiterhin, daß das flüssige Medium direkt in die Formen der nachgeschalteten Verarbeitungsmaschine läuft, ober über die vorgesehenen Verteiler und Rinnensysteme. In der Maschine selbst wird durch das eingetretene Kühlmedium ein unkontrolliertes Abkühlen sowie chemische Reaktionen ausgelöst. Um eine Verbesserung des eigentlichen Schneidvorganges zu erreichen, ist die Verwendung von Scheren vorgeschlagen worden, die drei oder mehrere Schneidelemente aufweisen.

Diese müssen in gleicher Weise eine Kühlung und Schmierung erhalten, was vergleichsweise aufwendig ist.

Erfindungsgemäß wird nun vorgeschlagen, daß das Gehäuse der Schneideinrichtung geschlossen ist und an seiner inneren, den Glasstrang umgebenden Umfläche in dem Bewegungsbereich der Schneidelemente einen Durchtrittsschlitz für diese aufweist und an seinen Außenseiten mit Anschlüssen für die Zu- und Ableitung eines Kühl- und/oder Schmiermittels sowie einer Durchführung für ein Antriebsglied der Schneidelemente versehen ist.

Auf diese Weise ist der Austritt des Kühl- und/oder Schmiermediums auf ein Niedrigmaß beschränkt, wobei darüber hinaus das Medium selbst im Kreislauf geführt ist, so daß Verluste weitgehend vermieden werden.

Ausführungsbeispiele der Erfindung sind an Hand der Zeichnungen näher erläutert, und zwar zeigt:

Figur 1 in schematischer Darstellung eine Draufsicht einer Schneideinrichtung mit ringsegmentförmigen Schneidelementen,

Figur 2 in schematischer Darstellung eine Draufsicht einer Schneidvorrichtung mit ellipsenförmigen Schneidelementen,

Figur 3 in schematischer Darstellung eine Schneidvorrichtung mit Antrieb,

Figur 4 in schematischer Darstellung eine Schneidvorrichtung für zwei Glasstränge,

Figur 5 in schematischer Darstellung die Draufsicht einer
Schneideinrichtung mit Anschlüssen zur Kühlung und
Schmierung und

Figur 6 eine Seitenansicht der Figur 5.

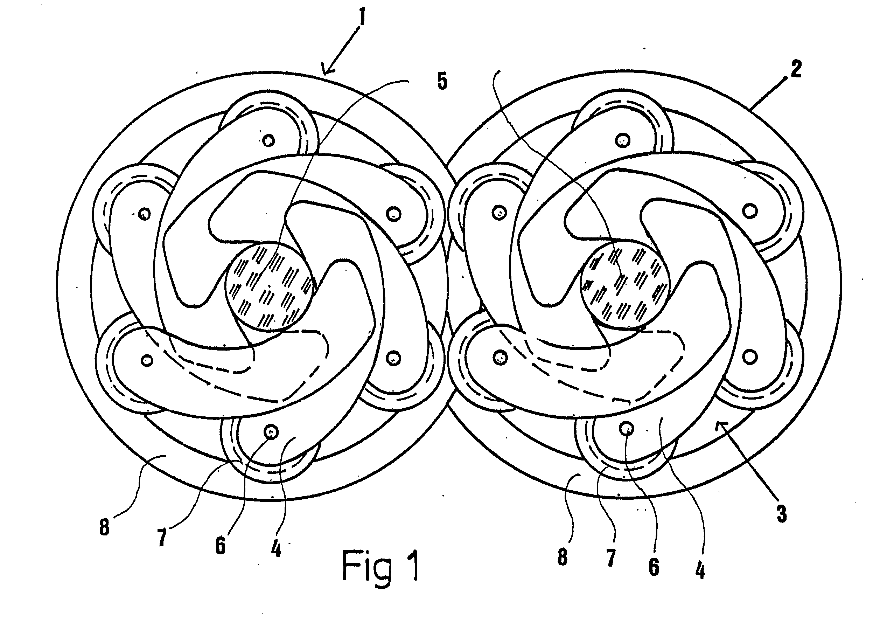

Bei der Schneideinrichtung 1 gemäß Figur 1 - 4 ist mit 2
das Gehäuse bezeichnet, in welchem mehrere, eine Schneideinheit 3 ergebende Schneidelemente 4 sich einander teilweise
überlappend angeordnet sind. Die Schneidelemente 4 umgeben je
einen Glasstrang 5, welcher mittig die Schneideinrichtungen 1
durchsetzen.

In diesem Ausführungsbeispiel ist ein doppelter Glasstrang
zum Erzeugen von Doppeltropfen dargestellt. Die Schneidelemente 4 sind an ihren einen Enden mittels der Achsen 6 drehbar gelagert, und zwar mittels der Planetenräder 7, die mit
den äußeren Zahnkränzen 8 kämmen.

Die Schneidkanten der Schneidelemente 4 weisen Kurvenform
auf. Diese kann konkav oder konvex ausgebildet sein. Die Gestaltung ist derart und die Anordnung der Schneidelemente 4 ist so vorgenommen, daß der Bewegungsbereich der Schneidelemente 4 sich von der völligen Freigabe der Glasstränge
5 bis zu deren Durchtrennung erstreckt.

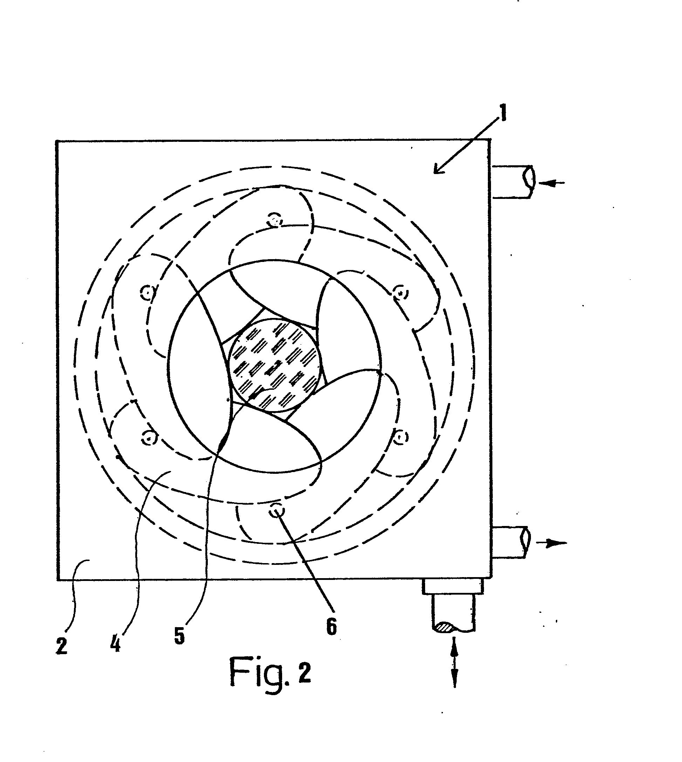

Bei der Ausführung nach Figur 1 bestehen die Schneidelemente 4 aus plattenförmigen Ringsegmenten, während bei
der Ausführung nach Figur 2 etwa ellipsenförmige Schneidelemente 4 vorgesehen sind.

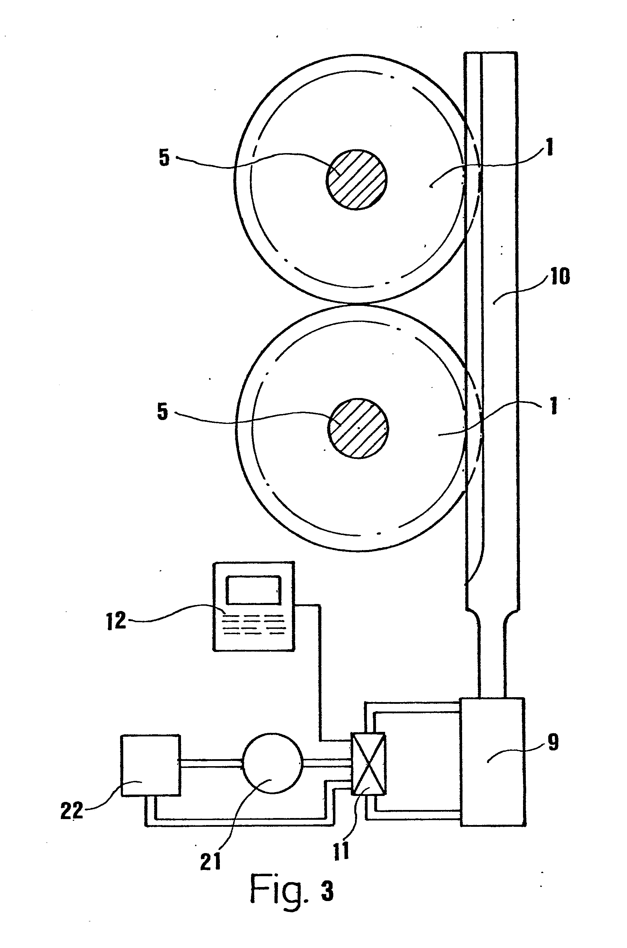

Wie aus Figur 3 hervorgeht, können die Schneideinheiten 3
einen gemeinsamen Antrieb in Form einer Axial-Kolben-Einheit 9 besitzen, der an einer Zahnstange 10 angreift, die
mit den Zahnkränzen 8 der Schneideinrichtungen 1 in Eingriff
steht.

Die hydraulische Axial-Kolben-Einheit 9 wird gesteuert über
das Ventil 11 und den elektronischen Rechner und Prozessor 12.

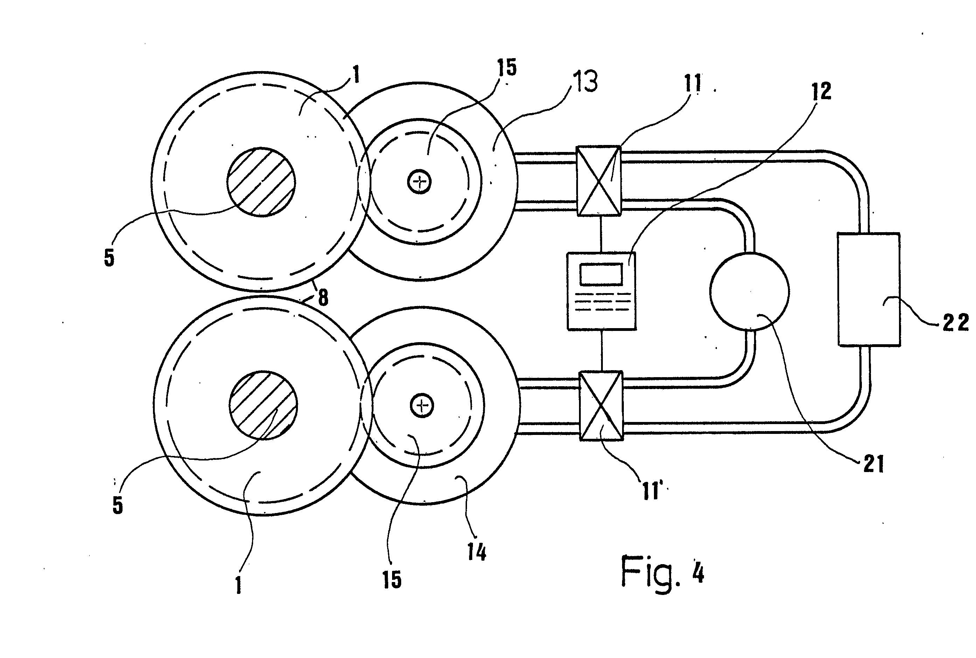

Bei der Ausführung nach Figur 4 sind getrennte Antriebe in
Form von hydraulischen Drehkolben 13, 14 für die Schneideinrichtungen 1 vorgesehen. Diese arbeiten über Getriebe 15
unmittelbar auf die Zahnkränze 8 der Schneideinrichtungen 1.

Die hydraulischen Drehkolben 13, 14 sind von Umsteuerventilen 11, 11' betätigt, welche von dem Rechner und Prozessor 12 gesteuert sind.

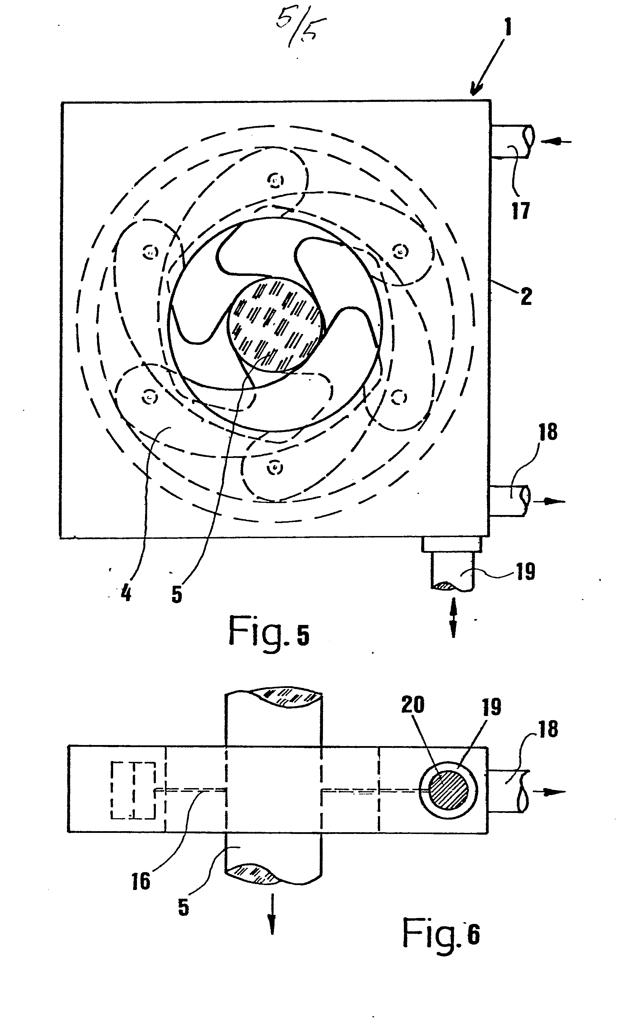

Aus Figur 5 und 6 ist die Kühl- und/oder Schmiermöglichkeit
der Schneideinrichtung 1 ersichtlich. Zu diesem Zwecke ist
das Gehäuse 2 geschlossen ausgebildet. Mittig wird das Gehäuse von dem zu trennenden Glasstrang 5 durchsetzt. Die Schneidelemente 4 befinden sich teils innerhalb des Gehäuses 2, teils
in dem freien Raum zwischen dem Glasstrang 5 und dem Gehäuse 2.
Die Schneidelemente 4 treten aus Schlitzen 16 aus und reichen
bis an den Strang 5 heran, wie aus Figur 6 deutlich wird. An
seiner Außenseite ist das Gehäuse 2 mit Anschlüssen 17, 18
für die Zu- und Ableitung eines Kühl- und/oder Schmiermittels
versehen sowie einer abgedichteten Durchführung 19 für das
Antriebsglied 20 der Schneidelemente 4.

Zum Hydraulikantrieb gehören ferner eine Pumpe 21 sowie ein
Sammelbehälter 22.

**Dipl.-Ing. A. Spalthoff**
Patentanwalt

D-43 Essen 1, den 1. 4. 1981
Pelmanstraße 31
Postscheckbuch 440220
Telefon (0201) 772008

0062146

Akten-Nr. 24 180 B/O
in der Antwort bitte angeben

VEBA-GLAS AG

4300 Essen 12


P A T E N T A N S P R Ü C H E :


1. Schneideinrichtung zum Zerteilen eines flüssigen Glasstranges in einzelne Abschnitte (Tropfen) für die Weiterverarbeitung zu Hohlglasartikeln, dadurch gekennzeichnet, daß
diese ein Gehäuse (2) od.dgl. aufweist, in welchem mehrere,
eine Schneideinheit (3) bildende Schneidelemente (4) sich
einander teilweise überdeckend und den Glasstrang (5) umgebend angeordnet sind, die an ihren einen Enden drehbar gelagert und mit den Planetenrädern (7) eines Planetengetriebes verbunden sind, dessen äußerer Zahnkranz (8) mit einem
Antrieb in Verbindung steht.


2. Schneideinrichtung nach Anspruch 1, dadurch gekennzeichnet, daß die Schneidkanten der Schneidelemente (4) Kurvenform
aufweisen.

3. Schneideinrichtung nach Anspruch 2, dadurch gekennzeichnet, daß die Kurvenform konkav oder konvex ausgebildet ist.

4. Schneideinrichtung nach Anspruch 1 und/oder einem oder mehreren der vorhergehenden, dadurch gekennzeichnet, daß die Kurvenform der Schneideinrichtung (4) derart gestaltet und die Schneidelemente (4) so angeordnet sind, daß der Bewegungsbereich der Schneidelemente (4) sich von völliger Freigabe des Glasstranges (5) bis zu dessen Durchtrennung erstreckt.

5. Schneideinrichtung nach Anspruch 1 und/oder einem oder mehreren der vorhergehenden, dadurch gekennzeichnet, daß die Schneidelemente (4) aus Ringsegmenten bestehen.

6. Schneideinrichtung nach Anspruch 1 und/oder einem oder mehreren der vorhergehenden, dadurch gekennzeichnet, daß die Schneidelemente (4) ellipsenförmig ausgebildet sind.

7. Schneideinrichtung nach Anspruch 1 und/oder einem oder mehreren der vorhergehenden, dadurch gekennzeichnet, daß in dem Gehäuse (2) mehrere Schneideinheiten (3) vorhanden sind.

8. Schneideinrichtung nach Anspruch 1 und/oder einem oder mehreren der vorhergehenden, dadurch gekennzeichnet, daß die

- 3 -

0062146

Schneideinrichtungen (1) oder Schneideinheiten (3) einen gemeinsamen Antrieb besitzen, welcher an einer Zahnstange (10) angreift, die mit den Zahnkränzen (8) der Planetengetriebe in Eingriff steht.

9. Schneideinrichtung nach Anspruch 8, dadurch gekennzeichnet, daß als Antriebe für mehrere Schneideinrichtungen (1) bzw. Schneideinheiten (3) eine hydraulische Axial-KolbenEinheit (9) dient.

10. Schneideinrichtung nach Anspruch 1 und/oder einem oder mehreren der vorhergehenden, dadurch gekennzeichnet, daß als Antriebe für mehrere Schneideinrichtungen (1) bzw. Schneideinheiten (3) hydraulische Drehkolben (13, 14) dienen.

11. Schneideinrichtung nach Anspruch 1 und/oder einem oder mehreren der vorhergehenden, dadurch gekennzeichnet, daß die hydraulischen Antriebe (9, 13, 14) durch Umschaltventile (11, 11') od.dgl. betätigt sind, welche von einem Rechner und Prozessor (12) gesteuert sind.

12. Schneideinrichtung zum Zerteilen eines flüssigen Glasstranges in einzelne Abschnitte (Tropfen) für die Weiterverarbeitung zu Hohlglasartikeln, insbesondere unter Verwendung einer oder mehrerer Schneideinheiten nach Anspruch 1 und/oder

0062146

einem oder mehreren der vorhergehenden, dadurch gekennzeichnet, daß das Gehäuse (2) geschlossen ist und an seiner
einen, den Glasstrang (5) umgebenden Umfläche in den Bewegungsbereichen der Schneidelemente (4) einen Durchtrittsschlitz (16) für diese aufweist und an seinen Außenseiten
mit Anschlüssen (17, 18) für die Zu- und Ableitung eines
Kühl- und/oder Schmiermittels sowie einer abgedichteten
Durchführung (19) für ein Antriebsglied (20) der Schneidelemente (4) versehen ist.

Fig 1

Fig. 2

Fig. 3

Fig. 4

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-2 271 271  (MEYERS)<br>* Figur 4; Seite 2, linke Spalte, Zeilen 31-59 *<br><br>--- | 1-5,8 | C 03 B  7/10 |
| A | DE-A-2 324 861  (OBERLAND GLAS)<br>* Insgesamt *<br><br>--- | 1,4 | |
| A | US-A-1 568 531  (REYNOLDS)<br>* Insgesamt *<br><br>------ | 1 | |

RECHERCHIERTE
SACHGEBIETE (Int. Cl. 3)

C 03 B  7/00

Der vorliegende Recherchenbericht wurde für alle Patentansprüche erstellt.

| Recherchenort | Abschlußdatum der Recherche | Prüfer |
|---|---|---|
| DEN HAAG | 16-04-1982 | VAN DEN BOSSCHE W.L. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503. 03.82